# NEUE EUROPÄISCHE PATENTSCHRIFT

(11) **EP 0 901 928 B2**
(45) Veröffentlichungstag und Bekanntmachung des Hinweises auf die Entscheidung über den Einspruch: **27.12.2006**
(45) Hinweis auf die Patenterteilung: 12.05.2004
(21) Anmeldenummer: 98112930.7
(22) Anmeldetag: 11.07.1998
(51) Int. Cl.: B60K 25/00

(54) **Selbstfahrende Arbeitsmaschine**
Self propelled working vehicle
Véhicule de travail automoteur

(30) Priorität: 13.09.1997 DE 19740346
(43) Veröffentlichungstag der Anmeldung: 17.03.1999
(73) Patentinhaber: CLAAS Selbstfahrende Erntemaschinen GmbH, 33428 Harsewinkel (DE)
(72) Erfinder: Diekhans, Norbert, Dr., 33335 Gütersloh (DE)

(56) Entgegenhaltungen:
- EP-A- 0 512 726
- EP-A- 0 736 407
- EP-A- 0 838 141
- DE-A- 3 810 724
- DE-A- 4 311 054
- DE-A- 19 512 637
- DE-A- 19 624 085
- DE-C- 4 200 806

## Beschreibung

Die Erfindung bezieht sich auf eine selbstfahrende Arbeitsmaschine mit einem Antriebsmotor, dessen Antriebsleistung auf den Fahrantrieb und mindestens einen Nebenabtrieb zum Antrieb der Arbeitsaggregate verzweigt ist, wobei mindestens eine Meßeinrichtung, die an einen Nebenabtrieb abgegebene Leistung direkt oder indirekt, ermittelt und bei Überlastung ein Steuersignal für einen Leistungsregler zur Regelung der Ausgangsleistung des Antriebsmotors erzeugt.

Selbstfahrende Arbeitsmaschinen dieser Art sind beispielsweise landwirtschaftliche Fahrzeuge wie Mähdrescher, Feldhäcksler oder Traktoren oder auch Baumaschinen.

So weist ein selbstfahrender Mähdrescher neben dem Fahrantrieb in Form eines mechanischen Antriebs oder eines dem Antriebsmotor nachgeordneten Hydrostaten, von dem aus die Antriebsleistung hydrostatisch auf die Antriebsräderübertragen wird, eine Vielzahl von Arbeitsaggregaten (Schneidwerk, Dresch- und Abscheideorgane, Strohhäcksler, Gebläse, Elevator etc.) auf, die als Nebenabtriebe von der Motorwelle des Antriebsmotors zusätzlich direkt oder indirekt angetrieben werden.

Beim selbstfahrenden Feldhäcksler sind die Nebenabtriebe zum Antrieb des Vorsatzgerätes, des Häckselaggregats, des Auswurfbeschleunigers und anderen Arbeitsaggregaten vorhanden. Diese Arbeitsaggregate werden zum Teil parallel nebeneinander und zum Teil hintereinander in einem Antriebsstrang betrieben.

Bei Traktoren ist es bekannt, neben dem Fahrantrieb und den Hydraulikpumpen eine sogenannte Zapfwelle zum Antrieb von zusätzlichen Arbeitsaggregaten vorzusehen. Aus Kostengründen ist man bestrebt, über den Antriebsmotor des Traktors möglichst viele zusätzliche Arbeitsaggregate anzutreiben. Dies hat dazu geführt, daß viele Traktoren zwei Zapfwellen (eine Heckzapfwelle und eine Frontzapfwelle) aufweisen. Bei einigen Traktoren gibt es bereits eine weitere, obenliegende Zapfwelle zur Übertragung der Leistung des Antriebsmotors auf Zusatzaggregate im oberen Aufbaubereich des Traktors.

Um den Leistungsbedarf dieser selbstfahrenden Arbeitsmaschinen hinsichtlich des Fahrantriebes und hinsichtlich der Nebenabtriebe befriedigen zu können, werden immer größere Ausgangsleistungen des Antriebsmotors erforderlich. Allerdings dürfen die einzelnen Arbeitsaggregate und das Getriebe für den Fahrantrieb bauartbedingt nur bis zu einer maximalen Eingangsleistung beziehungsweise Drehmoment betrieben werden. Bei bestimmten Einsatzsituationen kann es somit vorkommen, daß der Antriebsmotor ein größeres Drehmoment erzeugt als die Nebenabtriebe beziehungsweise bestimmte Nebenabtriebe oder das Getriebe aufnehmen können. In diesem Fall kann es zu einer Beschädigung oder einem verstärkten Verschleiß der Antriebselemente, Arbeitsaggregate oder eines Getriebes kommen.

Dieses Problem wird beispielsweise in der gattungsgemässen DE 196 24 085 A1 angesprochen. Dort ist eine selbstfahrende Arbeitsmaschine in Form eines Zementlastwagens beschrieben, die zusätzlich zum Fahrantrieb einen von dem Antriebsmotor angetriebenen Zementmischer als Nebenabtrieb aufweist. Der Fahrantrieb erfordert hier einen Antriebsmotor, der in der Lage ist, Drehmomente zu entwickeln, die bedeutend größer sind als das maximal zulässige Drehmoment für den Zementmischer.
Bei einem Zementlastwagen gibt es im wesentlichen zwei Einsatzsituationen: a) Straßenfahrt des Zementlastwagens bei gleichzeitigem Antrieb des Zementmischers; b) Standbetrieb des Zementlastwagens bei angetriebenem Zementmischer. In der Einsatzsituation b), wo das Drehmoment des Antriebsmotors vollständig auf den Zementmischer entfällt, ist es daher möglich, daß das maximal zulässige Drehmoment für den Zementmischerüberschritten wird. Aus diesem Grunde wird in der DE 196 24 085 A1 vorgeschlagen, in der Einsatzsituation b) das Drehmoment des Antriebsmotors über einen Leistungsregler automatisch zu begrenzen, wenn das maximal zulässige Drehmoment des Zementmischers erreicht ist. Damit die automatische Drehmomentbegrenzung erfolgen kann, muß der Bediener diese Begrenzungskontrolle jedoch zuvor über einen Ein-/Ausschalter aktivieren. Zudem ist der Überlastungsschutz nur auf die Absicherung des Zementmischers im Standbetrieb bei ruhendem Fahrantrieb und nicht zusätzlich auch zur Absicherung des Fahrantriebs ausgelegt. Über die bloße Sicherungsfunktion des Zementmischers hinausgehend erlaubt die vorgeschlagene Drehmomentüberwachung keine weitere Beeinflussung des Antriebsmotors.

Bei selbstfahrenden Arbeitsmaschinen, insbesondere bei den oben erwähnten landwirtschaftlichen Fahrzeugen, ist die Problematik jedoch komplexer, da einerseits neben dem Fahrantrieb in der Regel mehrere Nebenabtriebe mit einer größeren Zahl von Arbeitsaggregaten vorhanden sind, und andererseits die Zahl der Einsatzsituationen, die jeweils einen unterschiedlichen Drehmomentbedarf für die Nebenabtriebe und den Fahrantrieb erfordern, größer ist als im Fall des Zementlastwagens gemäß der DE 196 24 085 A1. Zur Regelung des Antriebsmotors ist es wünschenswert, nicht nur ein einzelnes Aggregat durch Verminderung der Motorleistung gegen Überlastung abzusichern, sondern den Antriebsmotor so zu regeln, daß eine maximale Leistung für die Arbeitsfunktionen der Selbstfahrenden Arbeitsmaschine zur Verfügung steht, ohne daß dadurch die Arbeitsaggregate in ihrer Funktion überlastet werden.

Unterschiedliche Einsatzsituationen für einen Mähdrescher und damit zusammenhängend eine ständig wechselnde Belastungssituation der einzelnen Arbeitsaggregate ergeben sich beispielsweise bei Fahrten in unterschiedlich dichtem Erntegutbestand, bei Ernteeinsätzen auf hügeligem Gelände, bei unterschiedlichen Bodenverhältnissen, Straßenfahrt usw. Häufige Wechsel zwischen unterschiedlichen Einsatzsituationen sind dabei nicht selten. Außerdem kann der Wechsel zwischen unterschiedlichen Einsatzsituationen in kleinen Schritten oder auch nahezu sprunghaft erfolgen.

Bei einem Traktor mit mehreren Zapfwellen als Nebenabtrieben hängt es davon ab, welche Zusatzgeräte angeschlossen werden, und ob zwei oder gar drei Zapfwellen gleichzeitig betrieben werden. Hier ist somit ebenfalls eine große Zahl von Einsatzsituationen möglich.

Aufgabe der Erfindung ist es, eine selbstfahrende Arbeitsmaschine gemäß dem Oberbegriff des Patentanspruches 1 so weiter zu entwickeln, daß in zuverlässiger und bedienerfreundlicher Weise ein optimaler Betrieb einer selbstfahrenden Arbeitsmaschine in unterschiedlichen Einsatzsituationen ohne eine unzulässige Überlastung einzelner Nebenabtriebe oder des Fahrantriebes ermöglicht wird.

Diese Aufgabe wird erfindungsgemäß dadurch gelöst, daß an sich bekannte Meßeinrichtungen zur Ermittlung mindestens einer leistungsbegrenzenden Größe in den jeweiligen Nebenabtrieben und in dem Fahrantrieb vorgesehen sind, weiter eine Auswerte- und Steuereinrichtung vorgesehen ist, die die von den Meßeinrichtungen ermittelten Größen, in Form von bekannten, weiterverarbeitbaren Signalen, als Eingangssignale empfängt, wobei in der Auswerte- und Steuereinrichtung in Abhängigkeit dieser Eingangssignale ein Steuersignal für einen Leistungsregler zur Regelung der Ausgangsleistung des Antriebsmotors erzeugt wird, wobei in der Auswerte- und Steuereinrichtung für zumindest einen Nebenabtrieb und den Fahrantrieb jeweils die maximal zulässige leistungsbegrenzende Größe gespeichert ist, und diese mittels einer Steuerungssoftware bei Überschreitung der ermittelten Größe an zumindest einem der Nebenabtriebe und/oder an dem Fahrantrieb in der Auswerte- und Steuereinrichtung ein Ansteuersignal zur Reduzierung der Ausgangsleistung des Antriebsmotors erzeugt wird, und bei Fortfall des Reduzierungskriteriums die Ausgangsleistung des Antriebsmotors wieder an die neue zulässige Leistungsgrenze anpaßt.

Zur Ermittlung der jeweiligen leistungsbegrenzenden Größe wie beispielsweise eine Drehzahl, ein Drehmoment, Druck, Spannung oder Strom, kann auf an sich bekannte Meßeinrichtung zurückgegriffen werden. Dabei ist es vorgesehen, die Drehmomente über entsprechende Drehmomentgeber an den leistungsübertragenden Wellen für den Fahrantrieb und den Nebenabtriebe direkt zu ermitteln. Anstelle einer direkten Drehmomentermittlung, können von der Auswerte- und Steuereinrichtung auch, wie dem Fachmann als austauschbar bekannte indirekte Meßverfahren eingesetzt werden welche die Belastung der einzelnen Komponenten wiederspiegeln. Im Falle des Hydrostatgetriebes kann dies beispielsweise ein Drucksensor für den Hydraulikdruck und ein Sensor für den Volumenstrom der Hydraulikflüssigkeit sein. Bei Nebenantrieben, die über Riemen angetrieben werden, kann das Drehmoment beispielsweise auch über entsprechende Meßeinrichtungen zur Ermittlung des Riemenschlupfes indirekt ermittelt werden. Ferner können Stellhebelwege, Auslenkungen an Riemen- oder Kettenspanner oder Stell- oder Antriebsmotorströme eine Leistung in einem Antriebsstrang wiederspiegeln.

Das Leistungssteuersignal S ist eine Funktion derverschiedenen leistungsbegrenzenden Größen, wie beispielsweise ein Funktion der einzelnen Drehmomente : S=f(M_{N1}, M_{N2}, M_{N3},...). Dabei bedeutet M_{G} das auf den Fahrantrieb wirkende Drehmoment und M_{N1} das auf den i-ten Nebenabtrieb wirkende Drehmoment. Durch entsprechende Programme in der vorzugsweise von einem Mikroprozessor gebildeten Auswerte-und Steuereinrichtung, die mit einer geeigneten Software ausgestattet ist, können die Eingangssignale nach den verschiedensten Kriterien ausgewertet und miteinander verknüpft werden. Auf diese Weise wird erstmalig für selbstfahrende Arbeitsmaschinen, bei denen neben dem Fahrantrieb noch mehrere von dem einen Antriebsmotor angetriebene Nebenabtriebe vorgesehen sind, und die ein breites Spektrum von Einsatzsituationen mit jeweils unterschiedlichen Leistungsanforderungen an die verschiedenen Nebenabtriebe und den Fahrantrieb abzudecken haben, ein adäquates automatisches Leistungsmanagement ermöglicht. Der Antriebsmotor kann situationsgerecht in seiner Leistung nach Bedarf automatisiert herunter- und wieder hochgeregelt werden, wodurch die Beschränkung der Antriebsleistung auf das unbedingt notwendige Maß begrenzt bleibt und jeweils eine neue Anpassung der bereitgestellten Motorleistung an die aktuell vorliegenden Arbeitsverhältnisse erfolgt. Die automatisierte Regelung der Antriebsleistung des Antriebsmotors ist bedienungsfreundlich, da der Fahrer nicht in die Regelungsvorgänge einzugreifen braucht.

Bei den oben erwähnten selbstfahrenden Arbeitsmaschinen werden überwiegend Dieselmotoren als Antriebsmotoren eingesetzt, die vorzugsweise über eine elektronisch gesteuerte Einspritzpumpe zur Leistungsregelung verfügen. Die von der Einspritzpumpe in die Brennkammern des Antriebsmotors eingespritzten Kraftstoffmengen können so auf einfache Weise durch ein Steuersignal an die Einspritzpumpe beeinflußt werden, was einen unmittelbaren Einfluß hat auf das Leistungsvermögen des Antriebsmotors.

In einer Ausführungsform ist in der Auswerte-und Steuereinrichtung für jeden Nebenabtrieb und für den Fahrantrieb jeweils das maximal zulässige Drehmoment gespeichert. Somit kann bei Überschreitung des ermittelten Drehmoments über das zulässige Drehmoment an einem der Nebenabtriebe oder am Fahrantrieb in der Auswerte- und Steuereinrichtung eine Steuersignal zur Reduzierung der Motorausgangsleistung erzeugt werden, wodurch eine Beschädigung des Nebenabtriebes oder des Fahrantriebs verhindert wird. Bei dieser Art von "Überbelastungs-Kontrollmanagment" ist es nicht notwendig, daß der Bediener der selbstfahrenden Arbeitsmaschine darüber informiert ist, welche und wieviel Nebenabtriebe gerade aktiv sind und welche Belastungsgrenzwerte für diese bestehen.

In Abwandlung oder Ergänzung der vorgeschlagenen Erfindung kann mittels der vorgeschlagenen Messung der Drehmomente, Drücke oder Spannungen auch eine Extraleistung des Antriebsmotors durch ein Steuersignal abgerufen werden, wenn für die Auswerte- und Steuereinrichtung anhand der Meßwerte erkennbar ist, daß zumindest eines der Arbeitsaggregate oder der Fahrantrieb durch eine kurzfristige zusätzliche Leistung des Antriebsmotors nicht überlastet wird oder die Zuschaltung von zusätzlichen Arbeitsaggregaten überbrückt werden muß. Das ist beispielsweise dann der Fall, wenn alle oder bestimmte Nebenabtriebe und/oder der Fahrantrieb in einem vorbestimmten sicheren Drehmomentbereich betrieben werden, der auch nicht nach Leistungserhöhung verlassen wird. So kann beispielsweise ohne eine Gefährdung des Fahrantriebs bei einem Ernteeinsatz eines Mähdreschers an einem Hang und Bergauffahrt bei laufendem Dreschwerk die Motorausgangsleistung über einen Nominalwert erhöht werden, der bei Straßenfahrt ohne Einschaltung der zusätzlichen Arbeitsaggregate eine Übedastung des Fahrantriebs bedeuten würde.

Ein besonderer Vorteil ergibt sich, wenn die maximal zulässigen Drehmomente der einzelnen Nebenabtriebe änderbar abgespeichert werden können. So können beispielsweise an einen Traktor mit mehreren Zapfwellen die unterschiedlichsten Zusatzgeräte angeschlossen und gleichzeitig betrieben werden, ohne daß die Gefahr der Überlastung einzelner Zusatzgeräte besteht. Der Bediener muß lediglich die maximal zulässigen Drehmomente für die Nebenabtriebe in Abhängigkeit der anzuschließenden Zusatzgeräte einspeichern. Dies kann durch manuelle Eingabe der Werte erfolgen oder aber auch einfach durch Auswahl des entsprechenden Zusatzgerätes (Mähwerk, Roder, Hersteller, Typ) aus einer im zentralen Rechner der Arbeitsmaschine gespeicherten Zusatzgeräteliste, in der die zugehörigen Grenzwerte gespeichert sind. Hiermit wird ein Höchstmaß an Flexibilität und Zuverlässigkeit erreicht.

In einer weiteren Ausführungsform ist es vorgesehen, daß in der Auswerte- und Steuereinrichtung verschiedene Gewichtungsfaktoren (X1, X2, X3) für die Nebenabtriebe zur Bestimmung des Steuersignals S für die Leistungsregelung des Antriebsmotors vorgesehen sind: S = f(M_{G}, X1*M_{N1}, X2*M_{N2}, X3*M_{N3},...). Vorzugsweise lassen sich die Gewichtungsfaktoren änderbar abspeichern. Damit können dominierende Leistungsverbraucher ausgewählt und Prioritäten im Leistungsmanagement gesetzt werden.
In einer weiteren Ausführungsform ist es vorgesehen, daß zusätzlich zu den Drehmomenten der Nebenabtriebe und des Fahrantriebs mindestens eine weitere den Betrieb begrenzende Größe, zumindest einen den Nebenabtriebe und/oder den Fahrantrieb begrenzender Parameter in der Auswerte- und Steuereinrichtung zur Leistungsregelung des Antriebsmotors verwendet wird. Hierdurch wird eine zusätzliche Betriebssicherheit geschaffen und der Antriebsmotor in die Leistungsregelung integriert. So können den Antriebsmotor leistungsbegrenzende Parameter wie Kühlwasser- oder Öltemperatur des Antriebsmotors in der Auswerte- und Steuerungseinrichtung zur Leistungsregelung des Antriebsmotors verwendet werden. Stellt die Auswerte- und Steuerungseinrichtung durch eine geeignete Sensorik fest, daß sich die Werte der leistungsbegrenzenden Parameter ihrem gerade noch tolerablen Grenzbereich nähern, so kann die Auswerte- und Steuerungseinrichtung über einen geeigneten Regelalgorithmus die Antriebsleistung des Antriebsmotors so regeln, daß sich die Näherungskurve der Annäherung an den Grenzwert des leistungsbegrenzenden Parameters so zunehmend abflacht, daß der Grenzwert nur näherungsweise und langsam erreicht wird. Hierdurch wird sichergestellt, daß eine Herunterregelung der Motorleistung nicht abrupt, sondern stetig erfolgt. Durch eine solche Anordnung wird bei zusätzlicher Betriebssicherheit die Funktion der Arbeitsmaschine nur wenig beeinträchtigt.

In einer weiteren Ausführungsform ist es vorgesehen, daß bei einem Drehmomentanstieg an einem oder mehreren Nebenabtrieben von der Auswerte- und Steuereinrichtung ein Steuersignal für die Einspritzpumpe derart erzeugt wird, daß kurzzeitig die Kraftstoffeinspritzmenge beziehungsweise die abgegebene Leistung erhöht wird und anschließend entsprechend zurückgenommen wird. Bei einer Erntemaschine sind in besonders vorteilhafter Weise Sensoren zur Bestimmung der Erntegutmenge im Erntegutfluß durch die Maschine vorgesehen, mit denen ein veränderter Leistungsbedarf bestimmter Nebenabtriebe vorherbestimmbar ist. Beispielsweise könnte mit einem Sensor im Einzugskanal eines Mähdreschers eine Zunahme des auf die Dreschorgane zukommenden Eintegutes vorherbestimmt werden, woraufhin automatisch die Antriebsmotorleistung kurzfristig erhöht wird und somit rechtzeitig Energie in der rotierenden Dreschtrommel mit ihrem Trägheitsmoment gespeichert wird, die dann zur Verfügung steht, wenn die große Erntegutmenge verarbeitet werden muß. Dies alles geschieht unter Kontrolle der Auswerte- und Steuereinrichtung.

In einer weiteren Ausführungsform ist ein Leistungsmanagement vorgesehen, das auch bei ungleichförmiger Beschickung einen wesentlich gleichmäßigeren Betrieb der Arbeitsmaschine ermöglicht. Dazu wird bei einem kurzzeitigen Leistungsanstieg oder bei einem plötzlichen Drehzahlabfall ohne Gaspedalverstellung über einen geeigneten Regelalgorithmus der Auswerte- und Steuereinrichtung kurzzeitig die Kraftstoffeinspritzmenge im Antriebsmotor erhöht und diese danach mit einer größeren Zeitkonstante auf den ursprünglichen Wert zurückgenommen. Eine weitere Verbesserung der Wirkung der Vorrichtung ergibt sich, wenn geeignete Sensoren vor einem Arbeitsaggregat, das einen größeren Anteil der verfügbaren Antriebsleitung aufnimmt, die Mengenveränderungen der fließenden Gutmengen zu detektieren und an die Auswerte- und Steuereinrichtung zu übermitteln. Die Auswerte- und Steuereinrichtung kann dann den Leistungsbedarf im voraus erkennen und ein Stellsignal für eine Leistungserhöhung des Motors und/oder der Antriebe erzeugen und an diese übermitteln. Die nachfolgende Belastungsspitze an einem Arbeitsaggregat wird dann durch das zusätzliche Schwungmoment und/oder das erhöhte Antriebsmoment abgefangen. Genauso ist es auch denkbar, bei sich verringerndem Leistungsbedarf die Motorleistung zu verringern, um beispielsweise Kraftstoff zu sparen. Eine solche Einrichtung kann beispielsweise bei einem Feldhäcksler mit großem Leistungsbedarf der Häckseltrommel dazu dienen, einen größeren Drehzahlabfall aller Komponenten zu verhindern und außerdem die Arbeitsgeschwindigkeit zu egalisieren, damit die Entladung des Gutstromes auf ein nebenherfahrendes Überladefahrzeug nicht gestört wird.

Die vorliegende Erfindung kann nicht nur in selbstfahrenden Arbeitsmaschinen, sondern auch auf die Kombination eines Zugfahrzeuges mit einem vom Zugfahrzeug gezogenen oder getragenen Arbeitsgerät, dessen Arbeitsaggregate vom Zugfahrzeug über zumindest einen Nebenabtrieb angetrieben werden, angewendet werden. Dafür kann eine Schnittstelle zwischen dem Anbaugerät und der Arbeitsmaschine vorgesehen sein, über die leistungsbegrenzende Größen beispielsweise ein Drehmoment an einem Nebenabtrieb oder an einem davon weiter verzweigten Abtrieb durch an sich bekannte Mittel wie beispielsweise ein CAN- Bussystem an die Auswerte- und Steuereinheit übermittelt werden.

In den beigefügten Zeichnungen soll die Erfindung nachfolgend anhand von Ausführungsbeispielen veranschaulicht werden. Es zeigen:
- Fig. 1: einen schematischer Schnitt durch einen Mähdrescher mit seinen vom Antriebsmotor angetriebenen Nebenabtrieben (Arbeitsaggregaten),
- Fig. 2: ein Blockdiagramm eines Antriebs,
- Fig. 3: ein Antriebsschema eines selbstfahrenden Feldhäckslers,
- Fig. 4: einen Traktor als Zugmaschine mit einer angehängten Großballenpresse.

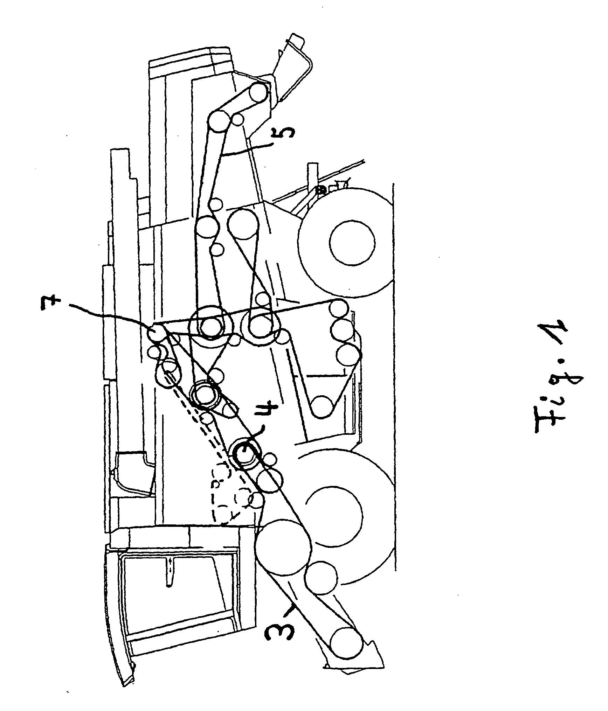

In Figur 1 ist ein schematischer Schnitt durch einen Mähdrescher gezeigt. Vom nicht näher bezeichneten Antriebsmotor werden die nicht näher gezeigten Arbeitsaggregate über Nebenabtriebe angetrieben. Dabei ist mit (3) der Nebenabtrieb zum Schneidwerk, mit (4) der Nebenabtrieb zu den Dreschorganen und mit (5) der Nebenabtrieb zum Strohhäcksler beispielhaft bezeichnet. Die übrigen Nebenabtriebe (Arbeitsaggregate) sind aus Gründen der Übersichtlichkeit nicht benannt. Mit (7) ist der Motorabtrieb zu den Nebenabtrieben bezeichnet.

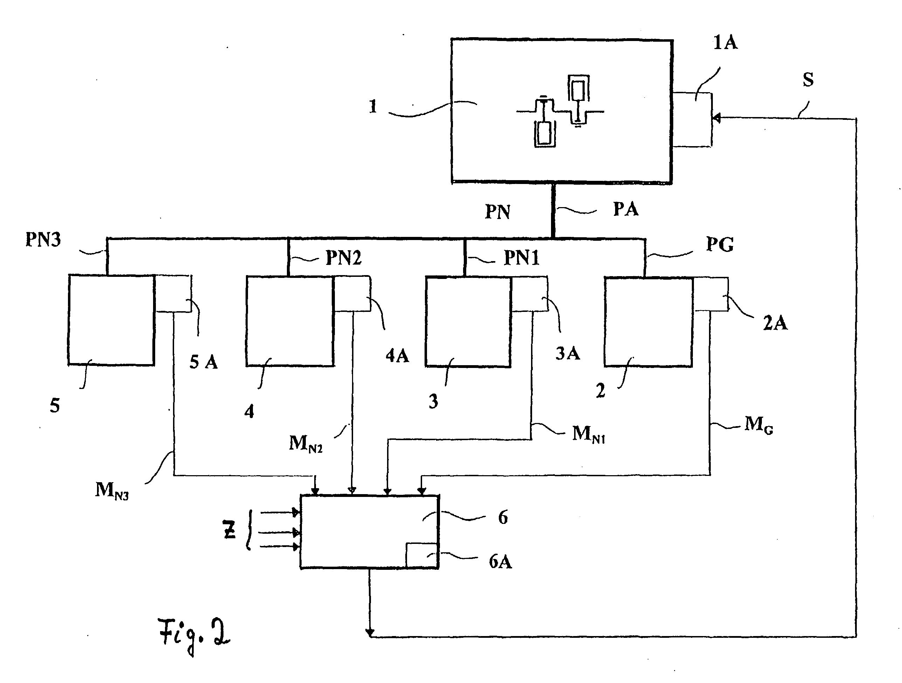

In Fig.2 ist ebenfalls schematisch ein Blockdiagramm mit dem Antriebsmotor (1) mit seinem Leistungsregler (1 A), dem Getriebe für den Fahrantrieb (2) und drei Nebenabtrieben (3, 4 ,5) gezeigt. Die Motorausgangsleistung (PA) verteilt sich auf das Getriebe (PG) und auf die Nebenabtriebe (PN; PN1, PN2, PN3) . Die Meßeinrichtungen (2A, 3A, 4A, 5A) zur Erfassung der leistungsbegrenzenden Größen, hier mehrere Drehmomente, liefern die Eingangssignale (M_{G}, M_{N1}, M_{N2}, M_{N3}) für die Auswerte- und Steuereinrichtung (6). Die Auswerte- und Steuereinrichtung (6) übernimmt die ermittelten Meßwerte von den Meßeinrichtungen (2A, 3A, 4A, 5A) und bereitet diese zu einem Steuersignal (S) auf. Auswerteprogramme und Grenzwerte der einzelnen Antriebe werden in dem Speicher (6A) gespeichert. Die Aufbereitung zu einem Steuersignal (S) geschieht, indem durch eine geeignete Software als Auswerteprogramm die Meßwerte mit den gespeicherten Grenzwerten verglichen werden. Ergibt sich bei dem Vergleich, daß die gespeicherten Grenzwerte eines oder mehrerer Arbeitsaggregate und/oder des Fahrantriebs überschritten werden oder auch, daß die Meßwerte weit unterhalb der zulässigen Grenzwerte liegen, so wird ein aus der Differenz zwischen Meßwerten und gespeicherten Grenzwerten abgeleitetes Steuersignal (S) an den Leistungsregler (1A) übermittelt. Die Ableitung kann beispielsweise durch ein ebenfalls gespeichertes Kennfeld oder durch einen geeigneten Regelalgorithmus erfolgen. Ergibt der nachfolgende Vergleich der Meßwerte mit den Grenzwerten durch die Auswerte- und Steuereinrichtung (6) eine Veränderung des Differenzwertes, so ermittelt die Auswerte- und Steuereinrichtung (6) ein neues Steuersignal (S), das wieder an den Leistungsregler (1A) übermittelt wird. Erfolgt der Vergleich der Meßwerte mit den Grenzwerten in kurzer zeitlicher Abfolge, so wird eine enggestufte Regelung erreicht, die vom Fahrer der selbstfahrenden Arbeitsmaschine als fließend und ohne größere Regelungssprünge wahrgenommen wird.

Durch diese Regelung können Überlastungen einzelner oder mehrerer Arbeitsaggregate oder des Fahrantriebs durch Verringerung der Antriebsleistung des Antriebsmotors (1) vermieden werden. Es ist aber auch möglich, Leistungsreserven des Antriebsmotors (1) zu mobilisieren, wenn von der Sensorik eine nicht vollständige Auslastung des Fahrantriebs (2) oder eines der Nebenabtriebe (3, 4, 5) ermittelt wird. In beiden Regelungsrichtungen ist es vorteilhaft, Betriebsparameter des Antriebsmotors in den Regelungsvorgang miteinzubeziehen. Deshalb kann die Auswerte- und Steuereinrichtung (6) als Parameter (Z) beispielsweise die Kühlmittel- und/oder Öltemperatur des Antriebsmotors (1), Ladedruck eines Turboladers, Zündzeitpunkt der Verbrennung im Antriebsmotor (1) oder Ventilsteuerzeiten abfragen und in den Vorgang der Ermittlung eines Steuersignals (S) einbeziehen. In einer solchen Ausgestaltung der Erfindung werden nicht nur die dem Antriebsmotor (1) nachgeordneten Antriebselemente, sondern auch der Antriebsmotor (1) selbst in die Regelung des Antriebssystems einbezogen und vor Überlastung und übermäßigem Verschleiß geschützt. Außerdem können als Parameter (Z) auch Betriebsdaten wie beispielsweise Kühlmittel-und/oder Öltemperaturen des Fahrantriebs, eines oder mehrerer Nebenabtriebe oder von sonstigen Getrieben berücksichtigt werden.

Als Parameter (Z) können jedoch auch manuell eingegebene oder automatisierte Änderungsvorgaben für gespeicherte Grenzwerte oder Regelalgorithmen von der Auswerte- und Steuereinrichtung (6) verarbeitet werden. So können sich Grenzwerte ändern, wenn Vorsatzgeräte wie Schneidwerke getauscht werden oder wenn Zusatzaggregate eingeschaltet werden wie besondere Aufbereitungs-, Häcksel- oder Schneideinrichtungen der selbstfahrenden Arbeitsmaschine. Die automatisierte Änderung von gespeicherten Grenzwerten kann beispielsweise durch Vorsatzerkennungsschalter erfolgen, die beim Anschluß des Vorsatzes an die selbstfahrende Arbeitsmaschine ihre Kennung an die Auswerte- und Steuereinrichtung (6) übermitteln oder als eine Routine, die ein Hinzu- oder Abschalten einer Komponente, beispielsweise durch eine Bedienschalterabfrage, erkennt.

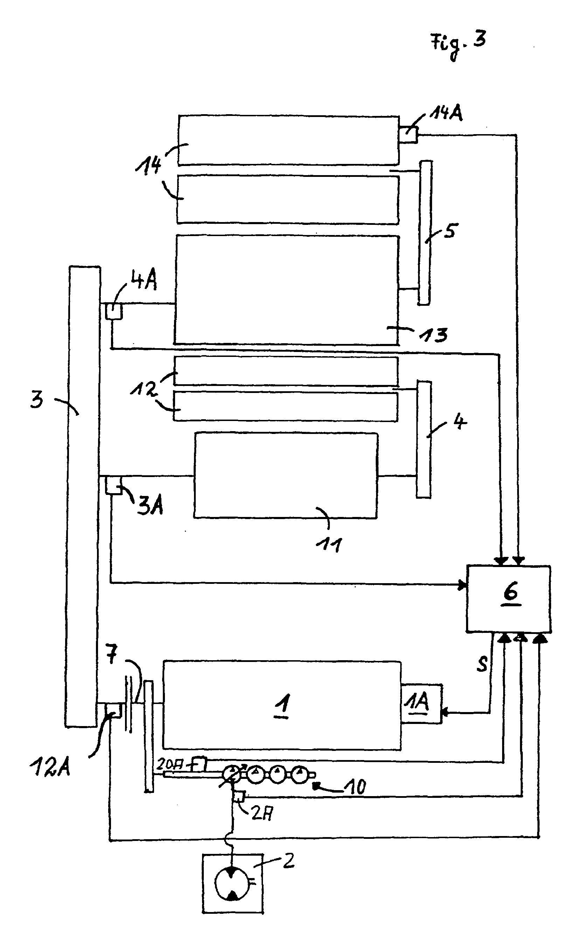

In Figur 3 ist ein Antriebsschema eines selbstfahrenden Feldhäckslers gezeigt. Der Antriebsmotor (1) überträgt seine Antriebsleistung über den Motorabtrieb (7) auf die Nebenabtriebe. Für den Fahrantrieb (2) und einzelne Stellfunktionen sind an dem Motorabtrieb (7) Hydraulikpumpen (10) angeschlossen, deren Antriebsleistung vom Sensor (20A) überwachtwird. Über die Nebenabtriebe (3, 4, 5) wird die Antriebsleistung auf den Nachbeschleuniger (11), die Corn-Crackerwalzen (12), die Häckseltrommel (13) und die Vorpreßwalzen (14) als Arbeitsaggregate übertragen. Die vom Nebenabtrieb (3) übertragene Antriebsleistung wird von jeweils an den Antriebswellen angebrachten Sensoren (20A, 12A, 3A, 4A) überwacht, die ihre Sensordaten an die Auswerte- und Steuereinrichtung (6) übermitteln. Die Auswerte-und Steuereinrichtung (6) übermittelt wiederum ein Steuersignal (S) an den Leistungsregler (1A) des Antriebsmotors (1). Für die Erfindung ist es unabhängig vom in Figur 3 gezeigten Ausführungsbeispiel ohne Belang, ob der Grenzwertvergleich erst in der Auswerte-und Steuereinrichtung (6) erfolgt oder ob der Vergleich schon in den Sensoren (2A, 3A, 4A, 5A, 20A), die dazu mit entsprechenden Computerelementen zu Auswertung und Speicherung, zum Vergleich und zur Ausgabe der ermittelten Werte versehen sein müssen, vorgenommen wird und die Sensoren (2A, 3A, 4A, 5A, 12A, 20A) nur noch ein aufbereitetes Signal an die Auswerte-und Steuereinrichtung (6) übermitteln. Für eine höhere Regelgeschwindigkeit der Auswerte- und Steuereinrichung (6) kann es vorteilhaft sein, wenn diese nicht mehr alle Auswertungen selbst vornehmen muß, sondern nur noch von den Sensoren (2A, 3A, 4A, 5A, 20A) übermittelte Verhältniswerte auswerten muß. Auch würde ein CAN-Busnetz, an das alle Systemkomponenten und die Sensoren (2A, 3A, 4A, 5A, 12A, 20A) angeschlossen sein können, auf diese Weise mit einer geringeren Datenmenge belastet. Wird von einem der Sensoren (2A, 3A, 4A, 12A, 20A) eine Überlast gemeldet, so übermittelt die Auswerte- und Steuereinrichtung (6) ein Stellsignal (S), aufgrund dessen die Motorleistung des Antriebsmotors (1) verringert wird. Melden die Sensoren (2A, 3A, 4A, 12A, 20A), daß die Grenzwerte nicht erreicht sind, so kann die Auswerte- und Steuereinrichtung (6) ein Stellsignal (S) übermitteln, das entweder die Motorleistung verringert oder die Motorleistung erhöht, um eine angepaßte Arbeitsleistung der selbstfahrenden Arbeitsmaschine zu erzielen. Die Regelung ist allein abhängig von den Regelungsvorgaben, die manuell vom Fahrer eingebbar oder die in einem Speicher abgelegt abrufbar sind.

An eine Vorpreßwalze (14) ist ein Sensor (14A) angeschlossen, der die erntegutmengenbedingte Auslenkung der Vorpreßwalze (14) ermittelt, um anhand der sich annähernd proportional zur aufgenommenen Erntegutmenge verhaltenden Auslenkung die folgende Belastung derArbeitsaggregate zu ermitteln. Der Meßwert wird an die Auswerte- und Steuereinrichtung (6) weitergeleitet. Ergibt ein Vergleich der Meßwerte der Sensoren (4A) und (14A), daß das aktuell übertragende Drehmoment wohl nicht ausreichen wird, um die aufgenommene Erntegutmenge von der Häckseltrommel (13) ohne größeren Betriebsabfall verarbeiten zu können, so kann die Auswerte- und Steuereinrichtung (6) ein Stellsignal (S) an den Leistungsregler (1 A) übermitteln, aufgrund dessen die Antriebsleistung beziehungsweise die Drehzahl des Antriebsmotors (1) kurzzeitig erhöht wird, um eine störungsfreie Verarbeitung der anfallenden Erntegutmenge sicherzustellen. Eine Sensorik des Sensors (14A) könnte auch die Auslenkung des Niederhalters, das Drehmoment der Einzugsschnecke oder der Pickup messen, oder ein Laserscanner könnte die Höhe des Schwads vor dem selbstfahrenden Feldhäcksler abtasten. Eine funktionsähnliche Sensorik kann in entsprechender Weise in jeder anderen selbstfahrenden Arbeitsmaschine integriert werden, beispielsweise eine solche Sensorik im Schneidwerk oder Schrägförderkanal eines Mähdreschers oder einer gezogenen beziehungsweise selbstfahrenden Ballenpresse.

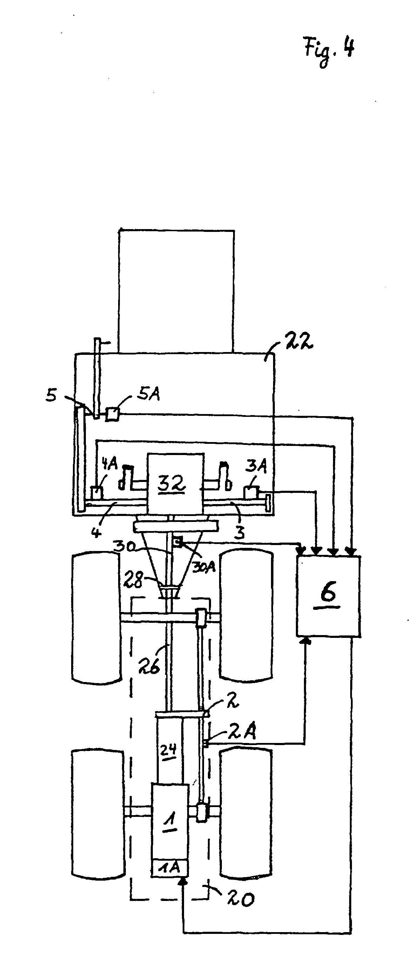

Figur 4 zeigt einen Traktor (20) mit einer angehängten Großballenpresse (22) in schematischer Darstellung. Der Traktor (20) weist einen Antriebsmotor (1) auf, der seine Antriebsleistung an ein Getriebe (24) abgibt, von wo aus die Antriebsleistung zum einen an einen Antriebsstrang zum Fahrantrieb (2), hier mit Allradantrieb gezeigt, und auf eine Zapfwelle (26) abgegeben wird. Über eine Kupplung (28) wird die Antriebsleistung der Zapfwelle (26) auf eine Gelenkwelle (30) der vom Traktor (20) gezogenen Großballenpresse (22) übertragen. Die Gelenkwelle (30) leitet die Antriebsleistung in ein Hauptgetriebe (32) der gezogenen Großballenpresse (22) ein. Vom Hauptgetriebe (32) aus werden die verschiedenen Arbeitsaggregate der Großballenpresse (22) angetrieben, und zwar die Pickupeinrichtung vom Nebenabtrieb (3), die Fördervorrichtung vom Nebenabtrieb (4) und die Bindeeinrichtung von der Vorgelegewelle (5). Die an dem Fahrantrieb sowie die an den Nebenabtrieben der gezogenen Großballenpresse (22) angebrachten Sensoren (2A, 3A, 4A, 5A, 30A) sind direkt oder über Schnittstellen mit der Auswerte- und Steuereinrichtung (6) verbunden, die nach Auswertung der Meßwerte ein daraus abgeleitetes Steuersignal (S) an den Leistungsregler (1A) des Antriebsmotors (1) übermittelt. Auf diese Weise kann die vorgeschlagene Antriebsregelung auch in einer Kombination eines Zugfahrzeuges mit einem vom Zugfahrzeug gezogenen oder getragenen Arbeitsgerät, dessen Arbeitsaggregate vom Zugfahrzeug angetrieben sind, verwirklicht werden.

Die gegenständliche Beschreibung ist nur als beispielhaft zu verstehen. Ein Fachmann ist ohne weiteres dazu in der Lage, Abwandlungen der vorgeschlagenen Lösung zu finden, die seinen technischen Erfordernissen oder den konkreten Maschinen, in denen er die vorgeschlagene Lösung einsetzen will, angepaßt ist.

## Patentansprüche

1. Selbstfahrende Arbeitsmaschine mit einem Antriebsmotor, dessen Antriebsleistung auf den Fahrantrieb und mindestens einen Nebenabtrieb zum Antrieb von Arbeitsaggregaten verzweigt ist, wobei eine Meßeinrichtung das auf einen Nebenabtrieb wirkende Drehmoment ermittelt und bei Überlastung ein Steuersignal für einen Leistungsregler zur Regelung der Ausgangsleistung des Antriebsmotors erzeugt,
**dadurch gekennzeichnet, daß**
- Meßeinrichtungen (2A, 3A, 4A, 5A, 20A, 30A) zur Ermittlung mindestens einer leistungsbegrenzenden Größe in den jeweiligen Nebenabtrieben (3, 4, 5) und in dem Fahrantrieb (2) vorgesehen sind,
- weiter eine Auswerte- und Steuereinrichtung (6) vorgesehen ist, die die von den Meßeinrichtungen (2A, 3A, 4A, 5A, 20A 30A) ermittelten Größen, als Eingangssignale empfängt,
- wobei in der Auswerte- und Steuereinrichtung (6) in Abhängigkeit dieser Eingangssignale ein Steuersignal (S) für einen Leistungsregler (1 A) zur Regelung der Ausgangsleistung des Antriebsmotors (1) erzeugt wird,
- wobei in der Auswerte- und Steuereinrichtung (6) für zumindest einen Nebenabtrieb (3, 4 ,5) und den Fahrantrieb (2) jeweils die maximal zulässige leistungsbegrenzende Größe gespeichert ist, und
- diese mittels einer Steuerungssoftware bei Überschreitung der ermittelten begrenzenden Größe an zumindest einem der Nebenabtriebe (3,4,5) und/oder an dem Fahrantrieb (2) in der Auswerte- und Steuereinrichtung (1) ein Ansteuersignal (S) zur Reduzierung der Ausgangsleistung (PA) beziehungsweise der Drehzahl des Antriebsmotors (1) erzeugt wird, und bei Fortfall des Reduzierungskriteriums die Ausgangsleistung (PA) des Antriebsmotors (1) wieder an die neue zulässige Leistungsgrenze anpaßt.

2. Selbstfahrende Arbeitsmaschine nach Anspruch 1,
**dadurch gekennzeichnet, daß**
die Ausgangsleistung (PA) beziehungsweise die Drehzahl des Antriebsmotors (1) anstelle einer Reduzierung durch ein Steuersignal (S) der Auswerte-und Steuereinrichtung (6) zur Erhöhung der Antriebsleistung (PA) über einen Nominalwert erhöht wird, wenn **dadurch** alle Nebenabtriebe (3, 4, 5) und der Fahrantrieb (2) den vorbestimmten Leistungsbereich nicht verlassen, und bei Fortfall des Erhöhungskriteriums die Ausgangsleistung (PA) des Antriebsmotors (1) wieder zurückgeregelt wird.

3. Selbstfahrende Arbeitsmaschine nach einem oder mehreren der vorstehenden Ansprüche,
**dadurch gekennzeichnet, daß**
in der Auswerte- und Steuereinrichtung (6) mindestens eine in den einzelnen Nebenabtriebe (3, 4, 5) maximal zulässige, leistungsbegrenzende Größe wie beispielsweise ein Drehmoment, Druck oder Strom änderbar abgespeichert ist.

4. Selbstfahrende Arbeitsmaschine nach einem oder mehreren der vorstehenden Ansprüche,
**dadurch gekennzeichnet, daß**
in der Auswerte- und Steuereinrichtung (6) verschiedene Gewichtungsfaktoren für die Nebenabtriebe zur Bestimmung des Steuersignals (S) für die Leistungsregelung des Antriebsmotors (1) vorgesehen sind.

5. Selbstfahrende Arbeitsmaschine nach Anspruch 4,
**dadurch gekennzeichnet, daß**
die Gewichtungsfaktoren in der Auswerte- und Steuereinrichtung (6) änderbar abgespeichert sind.

6. Selbstfahrende Arbeitsmaschine nach einem oder mehreren der vorstehenden Ansprüche,
**dadurch gekennzeichnet, daß**
zusätzlich zu den leistungsbegrenzenden Größen in den jeweiligen Nebenabtrieben (3, 4, 5) und des Fahrantriebs (2) mindestens ein weitere, den Betrieb des Antriebsmotors (1), Nebenabtriebes (3, 4, 5) und/oder Fahrantriebs (2), begrenzender Parameter (Z) in der Auswerte- und Steuereinrichtung (6) zur Leistungsregelung des Antriebsmotors (1) verwendet wird.

7. Selbstfahrende Arbeitsmaschine nach Anspruch 6,
**dadurch gekennzeichnet, daß**
der Parameter (Z) von sonstigen Betriebsdaten des Fahrantriebs (2), eines anderen Getriebes und/oder zumindest eines der Nebenabtriebe (3, 4, 5) gebildet ist.

8. Selbstfahrende Arbeitsmaschine nach einem oder mehreren der vorstehenden Ansprüche,
**dadurch gekennzeichnet dass**,
die Antriebsleistung des Antriebsmotors durch einen Leistungsregler, welcher beispielsweise direkt eine Einspritzpumpe ansteuert, der bei einem veränderten Leistungsbedarf am Fahrantrieb oder an mindestens einem Nebenabtrieb von einer Auswerte- und Steuereinrichtung ein Steuersignal für die Einspritzpumpe derart erhält, dass die Kraftstoffeinspritzmenge beziehungsweise die Motordrehzahl der neuen Leistungsanforderung angepasst wird.

9. Selbstfahrende Arbeitsmaschine nach einem oder mehreren der vorstehenden Ansprüche,
**dadurch gekennzeichnet, daß**
dieselbe eine Erntemaschine ist, und in der Erntemaschine zusätzlich zu den Meßeinrichtungen (2A, 3A, 4A, 5A, 20A, 30A) mindestens ein Sensor zur fortlaufenden Bestimmung der Erntegutmenge im Erntegutfluß durch die Maschine vorgesehen ist, wobei anhand dieses Sensorsignals der benötigte Leistungsbedarf in bestimmten Nebenabtriebe vorherbestimmt wird und in der Auswerte- und Steuereinrichtung zur Ansteuerung des Antriebsmotors (1) ausgewertet wird.

10. Selbstfahrende Arbeitsmaschine nach Anspruch 9,
**dadurch gekennzeichnet, daß**
der Sensor die Erntegutmenge vor dem Erreichen des momentan leistungsbegrenzenden Arbeitsaggregats ermittelt.

11. Selbstfahrende Arbeitsmaschine nach einem oder mehreren der vorstehenden Ansprüche,
**dadurch gekennzeichnet, daß**
der Leistungsregler (1A) ein elektronisches Motormanagementsystem umfaßt und anhand des von der Auswerte- und Steuereinrichtung (6) erzeugten Steuersignals (S) die Leistung des Antriebsmotors über eine Motorkennlinieänderung oder ein Umschalten zwischen verschiedenen, in dem Motormanagementsystem gespeicherten Motorkennlinien beziehungsweise Motorkennfeldern, verändert wird.

12. Selbstfahrende Arbeitsmaschine nach einem oder mehreren der vorstehenden Ansprüche,
**dadurch gekennzeichnet, daß**
die Meßeinrichtungen (2A, 3A, 4A, 5A, 20A ,30A), die Auswerte- und Steuereinrichtung (6) beziehungsweise das Motormanagementsystem in einem elektronischen Kommunikationsnetzwerk, beispielsweise einem CAN-Bus-System, integriert sind.

13. Selbstfahrende Arbeitsmaschine nach einem oder mehreren der vorstehenden Ansprüche,
**dadurch gekennzeichnet, daß**
die selbstfahrende Arbeitsmaschine aus einer Kombination eines Zugfahrzeugs mit einem vom Zugfahrzeug angehängten oder getragenen Arbeitsgerät (22), dessen Arbeitsaggregate vom Zugfahrzeug über zumindest einen Nebenabtrieb (30) angetrieben sind, gebildet ist und leistungsbegrenzende Größen an einzelnen Haupt- beziehungsweise Nebenabtrieben (3, 4, 5,) des angehängten oder getragenen Arbeitsgerätes (22) mit in die Berechnung des Steuersignals (S) für den Leistungsregler (1 A) einbezogen werden.

## Claims

1. A self-propelled working machine comprising a drive engine whose drive power is branched to the propulsive drive and at least one secondary output for driving working units, wherein a measuring device ascertains a torque acting on a secondary output drive and in the event of overloading produces a control signal for a power regulator for regulating the output power of the drive engine,
**characterised in that**
- there are provided measuring devices (2A, 3A, 4A, 5A, 20A, 30A) for ascertaining at least one power-limiting parameter in the respective secondary output drives (3, 4, 5) and in the propulsive drive (2),
- there is further provided an evaluation and control device (6) which receives as input signals the parameters ascertained by the measuring devices (2A, 3A, 4A, 5A, 20A, 30A),
- wherein a control signal (S) for a power regulator (1A) for regulating the output power of the drive engine (1) is produced in the evaluation and control device (6) in dependence on said input signals,
- wherein the respective maximum admissible power-limiting parameter is stored in the evaluation and control device (6) for at least one secondary output drive (3, 4, 5) and the propulsive drive (2), and
- by means of a control software when the ascertained limiting parameter is exceeded at at least one of the secondary output drives (3, 4, 5) and/or at the propulsive drive (2), in the evaluation and control device (1) an actuation signal (S) is produced for reducing the output power (PA) or the rotary speed of the drive engine (1) respectively and when the reduction criterion ceases the output power (PA) of the drive engine (1) is adapted again to the new admissible power limit.

2. A self-propelled working machine according to claim 1, **characterised in that** the output power (PA) or the rotary speed of the drive engine (1) respectively is increased instead of a reduction by a control signal (S) of the evaluation and control device (6) to increase the drive power (PA) above a nominal value if thereby all secondary output drives (3, 4, 5) and the propulsive drive (2) do not leave the predetermined power range and when the increase criterion ceases the output power (PA) of the drive engine (1) is regulated back again.

3. A self-propelled working machine according to one or more of the preceding claims, **characterised in that** at least one power-limiting parameter which is maximally admissible in the individual secondary output drives (3, 4, 5) such as for example a torque, pressure or current, is modifiably stored in the evaluation and control device (6).

4. A self-propelled working machine according to one or more of the preceding claims, **characterised in that** various weighting factors for the secondary output drives are provided in the evaluation and control device (6) for determining the control signal (S) for power regulation of the drive engine.

5. A self-propelled working machine according to claim 4, **characterised in that** the weighting factors are modifiably stored in the evaluation and control device (6).

6. A self-propelled working machine according to one or more of the preceding claims **characterised in that** in addition to the power-limiting parameters in the respective secondary output drives (3, 4, 5) and the propulsive drive (2) at least one further parameter (Z) limiting operation of the drive engine (1), a secondary output drive (3, ,4 5) and/or the propulsive drive (2) is used in the evaluation and control device (6) for power regulation of the drive engine (1).

7. A self-propelled working machine according to claim 6, **characterised in that** the parameter (Z) is formed by other operating data of the propulsive drive (2), another transmission arrangement and/or at least one of the secondary output drives (3, 4, 5).

8. A self-propelled working machine according to one or more of the preceding claims, **characterised in that** the drive power of the drive engine is adjusted by a power regulator which for example directly actuates an injection pump and which in the event of an altered power demand at the propulsive drive or at least one secondary output drive receives from the evaluation and control device a control signal for the injection pump such that the fuel injection amount of the engine speed is adapted to the new power requirement.

9. A self-propelled working machine according to one or more of the preceding claims, **characterised in that** it is a harvester and provided in the harvester in addition to the measuring devices (2A, 3A, 4A, 5A, 20A, 30A) is at least one sensor for continuously determining the amount of crop material in the flow of crop material through the machine, wherein the necessary power demand in given secondary output drives is predetermined on the basis of said sensor signal and evaluated in the evaluation and control device for actuation of the drive engine (1).

10. A self-propelled working machine according to claim 9 **characterised in that** the sensor ascertains the amount of crop material before reaching the instantaneously power-limiting working unit.

11. A self-propelled working machine according to one or more of the preceding claims, **characterised in that** the power regulator (1A) includes an electronic engine management system and on the basis of the control signal (S) produced by the evaluation and control device (6) the power of the drive engine is altered by way of an engine characteristic curve modification or by switching over between various engine characteristic curves or engine characteristic fields which are stored in the engine management system.

12. A self-propelled working machine according to one or more of the preceding claims, **characterised in that** the measuring devices (2A, 3A, 4A, 5A, 20A, 30A), the evaluation and control device (6) and the engine management system are integrated in an electronic communication network, for example a CAN-bus system.

13. A self-propelled working machine according to one or more of the preceding claims, **characterised in that** the self-propelled working machine is formed from a combination of a tractor vehicle with a working implement (22) which is carried or attached to the tractor vehicle and the working units of which are driven by the tractor vehicle by way of at least one secondary output drive (3) and power-limiting parameters at individual main and secondary output drives (3, 4, 5) of the attached or carried working implement (22) are also incorporated into calculation of the control signal (S) for the power regulator (1A).

## Revendications

1. Véhicule de travail automoteur comprenant un moteur d'entraînement dont la puissance alimente l'entraînement du véhicule et au moins une sortie auxiliaire pour entraîner des équipements de travail, un dispositif de mesure établissant le couple actif à la sortie auxiliaire avec, en cas de surcharge, envoi d'un signal de commande à un régulateur pour régler la puissance de sortie du moteur d'entraînement, **caractérisé en ce que**
- des dispositifs de mesure (2A, 3A, 4A, 5A, 20A, 30A) sont prévus pour déterminer au moins une grandeur constituant limite de puissance, sur chacune des sorties auxiliaires (3, 4, 5) et sur l'entraînement (2) du véhicule.
- il est prévu de plus un dispositif d'évaluation et de commande (6) qui reçoit en tant que signaux d'entrée des grandeurs déterminées par les dispositifs de mesure (2A, 3A, 4A, 5A, 20A, 30A).
- dans le dispositif d'évaluation et de commande (6) est établi en fonction de ces signaux d'entrée un signal de commande (S) adressé à un régulateur de puissance (1A) pour régler la puissance de sortie du moteur d'entraînement (1).
- dans le dispositif d'évaluation et de commande (6) est enregistré, pour au moins une sortie auxiliaire (3, 4, 5) et l'entraînement du véhicule (2) chaque fois la grandeur maximale admissible constituant limite de puissance.
- au moyen d'un logiciel de commande, quand est dépassée la grandeur constituant limite de puissance sur une des sorties auxiliaires (3, 4, 5) et ou sur l'entraînement du véhicule (2), un signal de commande (S) pour réduire la puissance de sortie (PA) ou la vitesse du moteur d'entraînement (1) est généré dans le dispositif d'évaluation et de commande (1) et quand le critère de réduction disparaît, la puissance de sortie (PA) du moteur d'entraînement (1) est réadaptée à la nouvelle limite de puissance admissible.

2. Véhicule de travail automoteur selon la revendication 1, **caractérisé en ce que** la puissance de sortie (PA) ou la vitesse de rotation du moteur d'entraînement (1) au lieu d'être réduite par un signal de commande (S) du dispositif d'évaluation et de commande (6) est élevée au-delà d'une valeur nominale afin d'augmenter la puissance d'entraînement (PA) si ainsi toutes les sorties auxiliaires (3, 4, 5) et l'entraînement du véhicule (2) ne sortent pas de la plage de puissance prédéfinie, et quand le critère d'augmentation disparaît, la puissance de sortie (PA) du moteur d'entraînement (1) est à nouveau réduite par régulation.

3. Véhicule de travail automoteur selon une ou plusieurs des revendications précédentes, **caractérisé en ce que** dans le dispositif d'évaluation et de commande (6) est mémorisée de manière variable au moins une grandeur maximale admissible constituant limite de puissance dans les sorties individuelles auxiliaires (3, 4, 5), comme par exemple un couple, une pression ou une intensité.

4. Véhicule de travail automoteur selon une ou plusieurs des revendications précédentes, **caractérisé en ce que** il est prévu dans le dispositif d'évaluation et de commande (6), pour les sorties auxiliaires, différents facteurs de pondération pour la détermination du signal de commande (S) destiné à réguler la puissance du moteur d' entraînement (1).

5. Véhicule de travail automoteur selon la revendication 4, **caractérisé en ce que** les facteurs de pondération sont mémorisés de manière variable dans le dispositif d'évaluation et de commande (6).

6. Véhicule de travail automoteur selon une ou plusieurs des revendications précédentes, **caractérisé en ce que** en plus des grandeurs constituant limite de puissance dans les sorties auxiliaires (3, 4, 5) et dans l'entraînement du véhicule (2), il est utilisé dans le dispositif d'évaluation et de commande (6) pour régler la puissance du moteur d'entraînement (1), au moins un autre paramètre (Z) délimitant le fonctionnement du moteur d'entraînement (1), de la sortie auxiliaire (3, 4, 5) et/ou de l'entraînement du véhicule (2).

7. Véhicule de travail automoteur selon la revendication 6, **caractérisé en ce que** le paramètre (Z) est constitué par des données de fonctionnement quelconques de l'entraînement de véhicule (2), d'un autre mécanisme et/ou d'au moins une des sorties auxiliaires (3, 4, 5).

8. Véhicule de travail automoteur selon une ou plusieurs des revendications précédentes, **caractérisé en ce que** la puissance délivrée par le moteur d'entraînement est réglée par un régulateur de puissance qui par exemple commande diectement une pompe d'injection et qui, quand le besoin de puissance varie sur l'entraînement des roues ou sur au moins une sortie secondaire, reçoit d'un dispositif d'évaluation et de commande un signal pour commander la pompe d'injection de manière à adapter à la demande de puissance le débit de carburant injecté et la vitesse de rotation du moteur.

9. Véhicule de travail automoteur selon une ou plusieurs des revendications précédentes, **caractérisé en ce que** ce véhicule est une moissonneuse et dans celle-ci, en plus des dispositifs de mesure (2A, 3A, 4A, 5A, 20A, 30A) il est prévu un détecteur pour déterminer en continu le débit moissonné traversant la machine, et au moyen du signal de ce détecteur, le besoin de puissance est prédéterminé dans des sorties auxiliaires définies et valorisé dans le dispositif d'évaluation et de commande pour commander le moteur d'entraînement (1).

10. Véhicule de travail automoteur selon la revendication 8, **caractérisé en ce que** le détecteur établit le débit moissonné avant que celui-ci atteigne l'équipement de travail dont la puissance est limitée à cet instant.

11. Véhicule de travail automoteur selon une ou plusieurs des revendications précédentes, **caractérisé en ce que** le régulateur de puissance (1A) comprend un système de gestion électronique du moteur et au moyen du signal de commande (S) produit par le dispositif d'évaluation et de commande (6), la puissance du moteur d'entraînement est modifiée en faisant varier la caractéristique du moteur, ou par commutation entre deux caractéristiques c'est-à-dire à l'intérieur d'un champs de caractéristiques enregistré dans le système de gestion du moteur.

12. Véhicule de travail automoteur selon une ou plusieurs des revendications précédentes, **caractérisé en ce que** les dispositif de mesure (2A, 3A, 4A, 5A, 20A, 30A), le dispositif d'évaluation et de commande (6) et le système de gestion du moteur sont intégrés à un réseau de communication par exemple un système à bus du type CAN.

13. Véhicule de travail automoteur selon une ou plusieurs des revendications précédentes, **caractérisé en ce que** ce véhicule est constitué par la combinaison d'un tracteur et d'une machine de travail (22) portée par le tracteur ou attelée à celui-ci, et dont les équipements de travail sont entraînés par le véhicule par l'intermédiaire d'au moins une sortie auxiliaire (30), les grandeurs constituant limite de puissance sur les sorties principale et auxiliaires (3, 4, 5) de la machine de travail portée ou attelée, étant prises en compte dans le calcul du signal de sortie (S) destiné au régulateur de puissance (1A).
